# EUROPÄISCHE PATENTANMELDUNG

(11) **EP 1 653 140 A1**
(43) Veröffentlichungstag der Anmeldung: **03.05.2006**
(21) Anmeldenummer: 04025602.6
(22) Anmeldetag: 28.10.2004
(51) Int. Cl.: F16L 23/026, F16L 57/00

(54) **Förderrohr für den Feststofftransport**

(71) Anmelder: Esser-Werke KG, 59581 Warstein (DE)
(72) Erfinder: Esser, Alexander, 59581 Warstein (DE)
(74) Vertreter: Ksoll, Peter

(57) **Zusammenfassung**

Die Erfindung betrifft ein Förderrohr 1 für den Feststofftransport mit einem Rohrkörper 7, bestehend aus einem Innenrohr 8 und einem Außenrohr 9. An jedem Rohrende 10 des Rohrkörpers 7 ist ein Kupplungsbund 11 festgelegt. Der Kupplungsbund 11 weist einen stirnseitigen Flansch 15 sowie einen Stutzen 16 auf, dessen Endabschnitt 20 das Rohrende 10 übergreift und mit der äußeren Oberfläche 25 des Außenrohrs 9 verschweißt ist. Zur Vergleichmäßigung eines Atmungseffektes zwischen Außenrohr 9 und Kupplungsbund 11 ist erfindungsgemäß vorgesehen, dass das Verhältnis der Wanddicke s₁ des Endabschnitts 20 zur Wanddicke s₂ des Außenrohrs 9 kleiner oder gleich 2 bemessen ist. Hierdurch kann die Dauerfestigkeit der Schweißverbindung von Kupplungsbund 11 und Außenrohr 9 deutlich gesteigert werden.

## Beschreibung

Die Erfindung betrifft ein Förderrohr für den Feststofftransport gemäß den Merkmalen im Oberbegriff von Patentanspruch 1.

Ein doppellagiges Förderrohr zählt beispielsweise durch die DE 101 43 187 C1 zum Stand der Technik. Das Förderrohr weist einen Rohrkörper, bestehend aus einem Innenrohr und einem Außenrohr auf. Das Innenrohr ist gehärtet, um dem zu transportierenden Feststoff einen möglichst langen Verschleißwiderstand entgegen zu setzen. Das Innenrohr wird von dem Außenrohr ummantelt, das schlagfest und schweißbar ist. Die Schlagfestigkeit ist insbesondere im Hinblick auf den Transport sowie die Montage- und Demontagevorgänge von Vorteil, da die Förderrohre üblicherweise einer rauen Handhabung unterworfen sind.

Um die Förderrohre zu einem Rohrstrang zusammensetzen zu können, sind die Rohrkörper an jedem Rohrende mit Kupplungsbunden ausgerüstet. Die Kupplungsbunde werden hierbei zur Sicherstellung einer zugfesten Verbindung an den Rohrenden mit der äußeren Oberfläche des Außenrohrs verschweißt. Zur Vermeidung von nachteiligen Gefügeveränderungen und Härte- bzw. Festigkeitssprüngen im Das Förderrohr besitzt einen Rohrkörper bestehend aus einem gehärteten Innenrohr und einem schweißbaren Außenrohr. An jedem Rohrende des Rohrkörpers ist ein Kupplungsbuhd festgelegt. Der Kupplungsbund weist einen stirnseitigen Flansch sowie einen Stutzen auf, dessen Endabschnitt das Rohrende übergreift und mit der äußeren Oberfläche des Außenrohrs verschweißt ist.

Kernpunkt der Erfindung bildet die Maßnahme, dass das Verhältnis der Wanddicke des Endabschnitts zur Wanddicke des Außenrohrs kleiner oder gleich 2 bemessen ist. Die Wanddicke des Endabschnitts des Stutzens soll erfindungsgemäß maximal das Doppelte der Wanddicke des Außenrohrs betragen. Gegenüber den herkömmlichen Ausführungsformen von Kupplungsbunden wird die Wanddicke an dem vom Flansch abgewandten Ende deutlich reduziert. Durch diese Maßnahme wird erreicht. dass ein im Betrieb auftretender "Atmungseffekt" zwischen Außenrohr und dem Kupplungsbund infolge von elastischen Verformungen und Biegewechselspannungen vergleichmäßigt wird. Hierdurch kann die Dauerfestigkeit der Schweißverbindung zwischen Rohrkörper und Kupplungsbund deutlich gesteigert werden. Insgesamt führt die erfindungsgemäße Ausgestaltung zu einer Steigerung der Standzeit Die Erfindung macht sich die Erkenntnis zu eigen, das ursächlich für das Auftreten von Schäden an der Schweißverbindung zwischen dem Endabschnitt des Kupplungsbunds und dem Außenrohr der vorerwähnte Atmungseffekt ist. Bislang wurde der Endabschnitt des Kupplungsbunds deutlich dicker als das dünnwandige Außenrohr ausgeführt. Da sich das dünnwandige Außenrohr im Betrieb elastisch verformt und schwingt, kommt es zu einem Atmungseffekt zwischen dem Außenrohr und dem starren Kupplungsbund. Dies führt je nach Belastungsart zu mehr oder weniger starken Biegewechselspannungen mit der Folge, dass die Schweißverbindung aufreißt. Dieses Problem kann dadurch vermieden bzw. zumindest deutlich reduziert werden, wenn die Wanddicke des Endabschnitts des Stutzens verringert wird und maximal das Doppelte der Wanddicke des Außenrohrs beträgt. Für die Praxis vielversprechend ist insbesondere ein Förderrohr, bei dem das Verhältnis der Wanddicke des Endabschnitts zur Wanddicke des Außenrohrs bei 1,5:1 oder 1:1 liegt.

Die Ausführung der Schweißnaht erfolgt als f lache Wölbnaht, die teilweise auf die Oberseite des Endabschnitts aufgelegt ist.

Der Einsatz von Verschleißringen vor den Rohrenden des Rohrkörpers erweist sich im Rahmen der Erfindung generell als vorteilhaft (Patentanspruch 2).

Die Verschleißringe bestehen aus einem verschleiß- und prallfesten Material, beispielsweise aus einem keramischen Verschleißwerkstoff, Chromkarbid-Guss, aus martensitischem Nickelhartguss oder ähnlichen Verschleißwerkstoffen. Üblicherweise sind beide Rohrenden des Förderrohrs mit einem Verschleißring ausgerüstet. Der Verschleißring ist jeweils vor die Stirnseite eines Rohrkörpers gesetzt und durch den Kupplungsbund eingekammert. Insbesondere im Längenbereich des Flansches ist auf der Innenseite des Kupplungsbunds ein Verschleißring vor dem Rohrende angeordnet.

In der Ausgestaltung gemäß den Merkmalen von Patentanspruch 3 ist vorgesehen, dass zumindest zwischen dem Rohrende und dem Verschleißring eine Dichtung eingegliedert ist. In der Praxis kommt hierbei beispielsweise eine Pappdichtung zum Einsatz. In erster Linie dient die Dichtung dazu, das Rohrende gegenüber dem Kupplungsbund beim Schweißvorgang abzudichten, damit kein Kühlwasser während der Schweißarbeiten an die Schweißnaht gelangt. Grundsätzlich kann aber auch eine Dichtung zum Einsatz gelangen, um den Fügespalt zwischen dem Rohrkörper und dem Kupplungsbund zusätzlich abzudichten und so ein Unterwandem des Kupplungsbunds durch das im Betrieb unter Druck stehende Förderfluid zu verhindern.

Nach den Merkmalen von Patentanspruch 4 ist an der Außenfläche des Stutzens eine Kupplungsnut vorgesehen. Grundsätzlich reicht der Flansch als Widerlager für die Kopplung zweier Förderrohre beispielsweise über eine Schelle aus. Durch die Kupplungsnut kann die Lagestabilität einer Schelle zur schussweisen Kopplung von Förderrohren verbessert werden.

Nach einer weiteren vorteilhaften Ausgestaltung gemäß den Merkmalen von Patentanspruch 5 weist der Stutzen des Kupplungsbunds einen Distanzring an seiner Außenfläche auf. Der Außendurchmesser des Distanzrings ist größer bemessen als der Außendurchmesser des Flanschs. Vorzugsweise ist der Distanzring im Querschnitt dreieckförmig gestaltet (Patentanspruch 6). Der Distanzring steht zumindest geringfügig über den übrigen Außenumfang des Kupplungsbunds, insbesondere des Flanschs, vor. Durch die Dimensionierung des Distanzrings kann erreicht werden, dass aufeinander liegende Rohre einander nur punktuell berühren. Hierdurch können Beschädigungen, insbesondere die Beschädigung einer äußeren Oberflächenbeschichtung, wie einer Lackierung, vermieden bzw. verringert werden_

Der Kupplungsbund ist im Rahmen der Erfindunge instückig ausgeführt, beispielsweise aus dem Stahlwerkstoff St52. Aus dem gleichen Stahlwerkstoff besteht das Außenrohr. Zur Sicherstellung des erfindungsgemäß angestrebten Erfolgs, nämlich der Vergleichmäßigung eines im Betrieb auftretenden Atmungseffekts durch die erfindungsgemäße Dimensionierung der Wanddicke des Endabschnitts am Kupplungsbund ist der Distanzring mit einem ausreichend großen Abstand zum Ende des Stutzens angeordnet. Der Endabschnitt überlappt ein Rohrende mit einem bestimmten Überlappungsmaß, welches etwa dem drei- bis fünffachen Betrag der Wanddicke des Endabschnitts entspricht.

Nach den Merkmalen von Patentanspruch 7 weist der Kupplungsbund an seiner Stirnseite einen radial einwärts gerichteten umlaufenden Kragen auf, dessen Innendurchmesser kleiner bemessen ist als der Außendurchmesser des Rohrkörpers. Der Kragen bildet einen Anschlag beim Aufschieben des Kupplungsbunds auf das jeweilige Ende eines Rohrkörpers. Gleichzeitig wird durch den Kragen ein integrierter Verschleißring fixiert.

Zu erwähnen ist noch, dass der Kupplungsbund endseitig an seinem Innenumfang eine Spielpassung aufweist, also gegenüber dem Außendurchmesser des Rohrendes ein geringfügiges Übermaß besitzt. Dies erleichtert das Aufschieben des Kupplungsbunds bei den Montagearbeiten zur Herstellung eines Förderrohrs.

Die Erfindung ist nachfolgend anhand von Ausführungsbeispielen näher beschrieben.

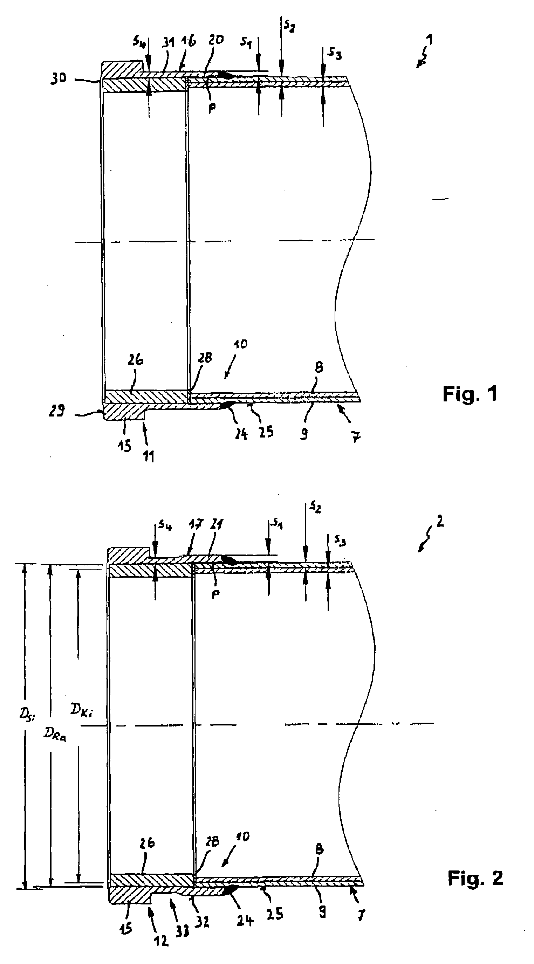

In den Figuren 1 bis 6 ist jeweils ein endseitiger Abschnitt eines erfindungsgemäßen Förderrohrs in einem Vertikalschnitt dargestellt. Einander entsprechende Bauteile bzw. Bauteilkomponenten tragen in den Zeichnungen die gleichen Bezugszeichen.

Die Figuren 1 bis 6 zeigen jeweils den Endabschnitt eines Förderrohrs 1-6 mit einem doppellagigen Rohrkörper 7, der aus einem hochverschleißfesten gehärteten Innenrohr 8 und einem druckfesten Außenrohr 9 besteht. An jedem Rohrende 10 des Rohrkörpers 7 ist ein Kupplungsbund 11-14 festgelegt. Jeder Kupplungsbund 11-14 weist einen stimseitigen Flansch 15 sowie einen sich in Richtung zum Rohrkörper 7 erstreckenden Stutzen 16-19 auf. Jeder Stutzen 16-19 übergreift mit seinem Endabschnitt 20-23 das Rohrende 10 und ist über eine Schweißnaht 24 mit der äußeren Oberfläche 25 des Außenrohrs 9 verschweißt.

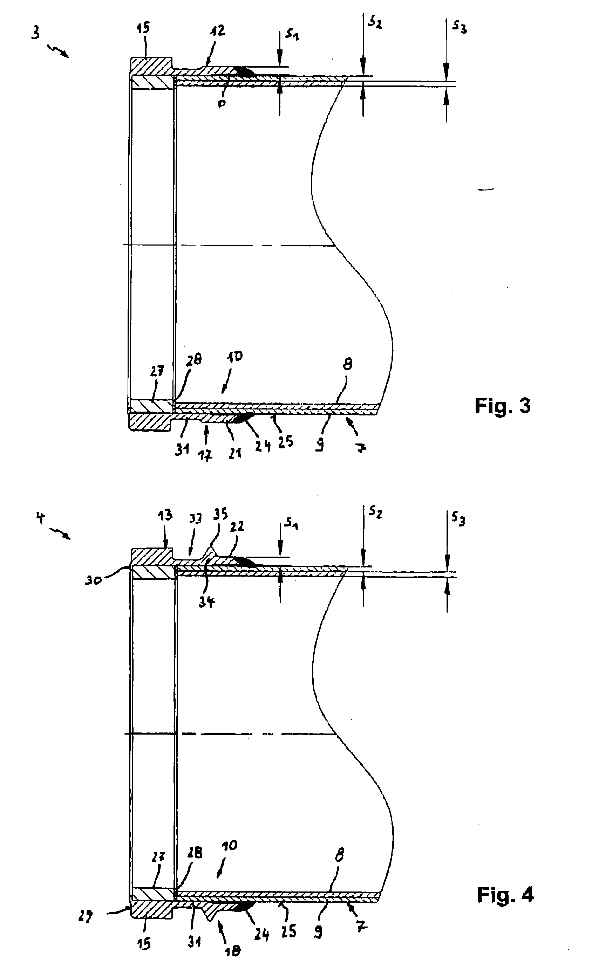

Jedes Förderrohr 1-6 ist mit einem Verschleißring 26 bzw. 27 ausgerüstet, der unter Eingliederung einer Dichtung 28 stirnseitig vor dem Rohrende 10 angeordnet ist und vom Kupplungsbund 11-14 übergriffen und eingekammert ist. Die Verschleißringe 26 bzw. 27 unterscheiden sich durch ihre Länge. Der Verschleißring 27, wie in den Figuren 3 und 4 zu erkennen, ist kurz ausgeführt und erstreckt sich im Längenbereich des Flanschs 15. Der Verschleißring 26 dagegen ist länger ausgeführt. Seine Länge erstreckt sich über den Längenbereich des Flanschs 15 bis etwa zur Mitte der Stutzen 16-19.

An der Stirnseite 29 des Kupplungsbunds 11-14 ist ein radial einwärts gerichteter umlaufender Kragen 30 vorgesehen, dessen Innendurchmesser D_{KI} kleiner bemessen ist als der Außendurchmesser D_{Ra} des Rohrkörpers 7. Der Kragen 30 bildet einen Anschlag beim Aufschieben eines Kupplungsbunds 11-14 auf das Rohrende 10 eines Rohrkörpers 7 und fixiert den Verschleißring 26, 27 frontseitig.

Zur Erleichterung des Aufschiebevorgangs bei der Montage der Kupplungsbunde 11-14 ist zwischen dem Innendurchmesser Dₛ₁ des Endabschnitts 20-23 und dem Außendurchmesser D_{Ra} des Rohrkörpers 7 ein Spiel p vorgesehen.

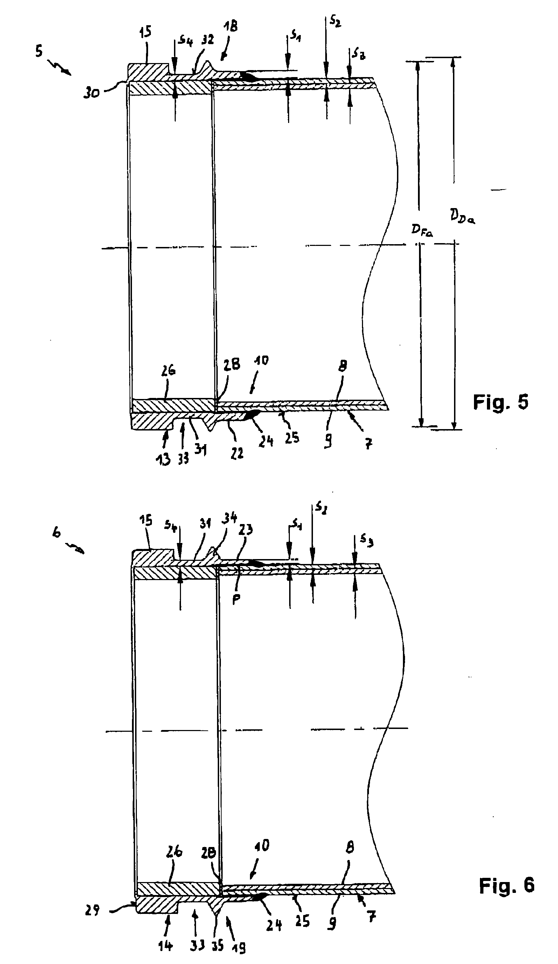

Das Verhältnis der Wanddicke s₁ des Endabschnitts 20-23 zur Wanddicke s₂ des Außenrohrs 9 ist kleiner oder gleich 2 bemessen. In den konkret dargestellten Ausführungsbeispielen beträgt die Dicke s₁ des Endabschnitts 20, 23 bei den Kupplungsbunden 11 und 14 gemäß den Darstellungen von Figur 1 und 6 2 mm. Die Wanddicke s₁ des Endabschnitts 21, 22 der Förderrohre 2-5 beträgt 3mm. Bei allen Förderrohren 1-6 ist die Wanddicke s₂ des Außenrohrs 9 2 mm stark. Konkret ergibt sich so ein Verhältnis der Wanddicke s₁ des Endabschnitts 20, 23 zur Wanddicke s₂ des Außenrohrs 9 von 1:1 bei den Förderrohren 1 und 6. Bei den Förderrohren 2-5 beträgt das Verhältnis der Wanddicke s₁ des Endabschnitts 21, 22 zur Wanddicke s₂ des Außenrohrs 9 dann 1,5:1.

Durch die Dimensionierung der Wanddicke s₁ des Endabschnitts 20-23 im Verhältnis zur Wanddicke s₂ des Außenrohrs 9 können im Betrieb auftretende Atmungseffekte zwischen Außenrohr 9 und Kupplungsbund 11-14 gleichmäßig werden, wodurch die Dauerfestigkeit der Schweißnaht 24 gesteigert und die Standzeit eines Förderrohrs 1-6 erhöht wird.

Die Wanddicke des Innenrohrs 8 ist in den Figuren 1-6 mit s₃ gekennzeichnet. I n dem hier dargestellten Ausführungsbeispiel beträgt die Wanddicke s₃ des Innenrohrs 8 jeweils 2 mm. Mit s₄ ist die Wanddicke im mittleren Längenbereich 31 des Stutzens 16-19 bezeichnet, der an den Flansch 15 angrenzt. In den Ausführungsbeispielen ist die Wanddicke s₄ gleich 2,5 mm.

Die Kupplungsbunde 12, 13 und 14 weisen jeweils an der Außenfläche 32 des Stutzens 17-19 eine Kupplungsnut 33 auf. In der Kupplungsnut 33 kommt eine hier nicht dargestellte Schelle zur Kopplung der Förderrohre 1-6 zu einem Rohrstrang zum Eingriff.

Bei den Kupplungsbunden 13 und 14 ist ferner an der Außenfläche 32 des Stutzens 18, 19 ein im Querschnitt dreieckförmiger Distanzring 28 vorgesehen. D er Außendurchmesser D_{Da} des Distanzrings 34 ist größer bemessen als der Außendurchmesser D_{Fa} des Flanschs 15, so dass der Distanzring 34 mit seiner Spitze 35 geringfügig über den Flansch 15 vorsteht. Auf diese Weise berühren sich aufeinander gestapelte Förderrohre 1-6 nur punktuell. Beschädigungen an einer lackierten Oberfläche der Förderrohre 1-6 werden so vermieden bzw. verringert.

### Bezugszeichen:

- 1 -: Förderrohr
- 2 -: Förderrohr
- 3 -: Förderrohr
- 4 -: Förderrohr
- 5 -: Förderrohr
- 6 -: Förderrohr
- 7 -: Rohrkörper
- 8 -: Innenrohr
- 9 -: Außenrohr
- 10 -: Rohrende
- 11 -: Kupplungsbund
- 12 -: Kupplungsbund
- 13 -: Kupplungsbund
- 14 -: Kupplungsbund
- 15 -: Flansch
- 16 -: Stutzen
- 17 -: Stutzen
- 18 -: Stutzen
- 19 -: Stutzen
- 20 -: Endabschnitt v. 16
- 21 -: Endabschnitt v. 17
- 22 -: Endabschnitt v. 18
- 23 -: Endabschnitt v. 19
- 24 -: Schweißnaht
- 25 -: äußere Oberfläche v. 9
- 26 -: Verschleißring
- 27 -: Verschleißring
- 28 -: Dichtung
- 29 -: Stirnseite v. 11-14
- 30 -: Kragen
- 31 -: Längenabschnitt v. 16-19
- 32 -: Außenfläche v. 17-19
- 33 -: Kupplungsnut
- 34 -: Distanzring
- 35 -: Spitze v. 34

- D_{Kl} -: Innendurchmesser v. 30
- D_{Ra} -: Außendurchmesser v. 7
- D_{Si} -: Innendurchmesser v. 20-23
- D_{Da} -: Außendurchmesser v. 28
- D_{Fa} -: Außendurchmesser v. 15
- p -: Passung
- s₁ -: Wanddicke v. 16
- s₂ -: Wanddicke v. 9
- s₃ -: Wanddicke v. 8
- s₄ -: Wanddicke v. 25

## Patentansprüche

1. Förderrohr für den Feststofftransport mit einem Rohrkörper (7) bestehend aus einem Innenrohr (8) und einem Außenrohr (9), wobei an jedem Rohrende (10) des Rohrkörpers (7) ein Kupplungsbund (11-14) festgelegt ist und der Kupplungsbund (11-14) einen stimseitigen Flansch (15) sowie einen Stutzen (16-19) aufweist, dessen Endabschnitt (20-23) das Rohrende (10) übergreift und mit der äußeren Oberfläche (25) des Außenrohrs (9) verschweißt ist, **dadurch gekennzeichnet, dass** das Verhältnis der Wanddicke (s₁) des Endabschnitts (20-23) zur Wanddicke (s₂) des Außenrohrs (9) kleiner oder gleich 2 bemessen ist.

2. Förderrohr nach Anspruch 1, **dadurch gekennzeichnet, dass** vor dem Rohrende (10) ein Verschleißring (26, 27) angeordnet ist.

3. Förderrohr nach Anspruch 2, **dadurch gekennzeichnet, dass** zumindest zwischen dem Rohrende (10) und dem Verschleißring (26, 27) eine Dichtung (28) eingegliedert ist.

4. Förderrohr wenigstens einem der Ansprüche 1 bis 3, **dadurch gekennzeichnet, dass** an der Außenfläche (32) des Stutzens (17-19) eine Kupplungsnut (33) vorgesehen ist.

5. Förderrohr nach wenigstens einem der Ansprüche 1 bis 3. **dadurch gekennzeichnet, dass** an der Außenfläche (32) des Stutzens (18, 19) ein Distanzring (34) vorgesehen ist, wobei der Außendurchmesser (Dpₐ) des Distanzrings (34) größerer bemessen ist als der Außendurchmesser (D_{Fa}) des Flanschs (15).

6. Förderrohr nach Anspruch 5, **dadurch gekennzeichnet, dass** der Distanzring (34) im Querschnitt dreieckförmig gestaltet ist.

7. Förderrohr nach wenigstens einem der Ansprüche 1 bis 6. **dadurch gekennzeichnet, dass** der Kupplungsbund (11-14) an seiner Stirnseite (29) einen radial einwärts gerichteten umlaufenden Kragen (30) aufweist, dessen Innendurchmesser (D_{Ki}) kleiner bemessen ist, als der Außendurchmesser (D_{Ra}) des Rohrkörpers (7).

## Geänderte Patentansprüche

### Geänderte Patentansprüche gemäss Regel 86(2) EPÜ.

**1.** Förderrohr für den Feststofftransport mit einem Rohrkörper (7) bestehend aus einem Innenrohr (8) und einem Außenrohr (9), wobei an jedem Rohrende (10) des Rohrkörpers (7) ein Kupplungsbund (11-14) festgelegt ist und der Kupplungsbund (11-14) einen stirnseitigen Flansch (15) sowie einen Stutzen (16-19) aufweist, dessen Endabschnitt (20-23) das Rohrende (10) übergreift und mit der äußeren Oberfläche (25) des Außenrohrs (9) verschweißt ist, wobei das Verhältnis der Wanddicke (s₁) des Endabschnitts (20-23) zur Wanddicke (s₂) des Außenrohrs (9) kleiner oder gleich 2 bemessen ist, **dadurch gekennzeichnet, dass** vor dem Rohrende (10) ein Verschleißring (26, 27) angeordnet ist und an der Außenfläche (32) des Stutzens (18, 19) ein Distanzring (34) vorgesehen ist, wobei zwischen dem Flansch (15) und dem Distanzring (34) eine Kupplungsnut (33) ausgebildet ist.

**2.** Förderrohr nach Anspruch 1, **dadurch gekennzeichnet, dass** zumindest zwischen dem Rohrende (10) und dem Verschleißring (26, 27) eine Dichtung (28) eingegliedert ist.

**3.** Förderrohr Anspruch 1 oder 2, **dadurch gekennzeichnet, dass** der Außendurchmesser (D_{Da}) des Distanzrings (34) größer bemessen ist als der Außendurchmesser (D_{Fa}) des Flanschs (15).

**4.** Förderrohr nach einem der Ansprüche 1 bis 3, **dadurch gekennzeichnet, dass** der Distanzring (34) im Querschnitt dreieckförmig gestaltet ist.

**5.** Förderrohr nach wenigstens einem der Ansprüche 1 bis 4, **dadurch gekennzeichnet, dass** der Kupplungsbund (11-14) an seiner Stirnseite (29) einen radial einwärts gerichteten umlaufenden Kragen (30) aufweist, dessen Innendurchmesser (D_{Ki}) kleiner bemessen ist, als der Außendurchmesser (D_{Ra}) des Rohrkörpers (7).
